# EUROPEAN PATENT APPLICATION

(11) **EP 4 838 060 A1**
(43) Date of publication of application: **11.11.2026**
(21) Application number: 26175952.6
(22) Date of filing: 30.04.2026
(51) Int. Cl.: F01D 25/16, F01D 5/02, F01D 25/20

(54) **NON-GEAR DRIVEN OIL PUMP OF BEARING ASSEMBLY OF GAS TURBINE ENGINE**

(30) Priority: 30.04.2025 US 202519195119
(71) Applicant: Pratt & Whitney Canada Corp., Longueuil, Québec J4G 1A1 (CA)
(72) Inventor: MENHEERE, Dave, (01BE5) Longueuil, J4G 1A1 (CA); POICK, Daniel, (01BE5) Longueuil, J4G 1A1 (CA); IVAKITCH, Richard, (01BE5) Longueuil, J4G 1A1 (CA)
(74) Representative: Dehns

(57) **Abstract**

A lubricant pump system (170) of a gas turbine engine (10), having: an outer case (130); a pump housing (180) surrounded by the outer case (130); a first shaft (100) surrounded by the pump housing (180) and rotatable in a direction during operation of the system: the outer case (130) has an outer wall (130A) that defines a sump (130F) to store a lubricant (140); the pump housing (180) defines a pump tube (185) that extends into the sump (130F); the first shaft (100) includes a first row of vanes; a first shroud surrounds the first row of vanes; a first flow area is defined between the first shaft (100) and the first shroud; and the first row of vanes are structured such that rotation of the first shaft (100) in the direction during operation creates negative pressure that draws the lubricant (140) from the sump (130F), through the pump tube (185), and the first shroud is structured such that it directs that lubricant (140) axially through the first flow area.

## Description

### BACKGROUND

Exemplary embodiments of the present disclosure pertain to the art of pump assemblies utilized in gas turbine engines and more specifically to a non-gear driven oil pump of a bearing assembly of the gas turbine engine.

Pump assemblies of the type found in a bearing assembly of a gas turbine engine may utilize gears to run rotary components. Over time, wear of the gears can result in operational inefficiencies and require maintenance.

### BRIEF DESCRIPTION

Disclosed is a lubricant pump system of a gas turbine engine, including: an outer case; a pump housing surrounded by the outer case; a first shaft surrounded by the pump housing and rotatable in a direction during operation of the lubricant pump system, wherein: the outer case has an outer wall that defines a sump configured to store a lubricant; the pump housing defines a pump tube that extends into the sump; the first shaft includes a first row of vanes; a first shroud surrounds the first row of vanes; a first flow area is defined between the first shaft and the first shroud; and wherein the first row of vanes of the first shaft are structured such that rotation of the first shaft in the direction during operation of the lubricant pump system creates negative pressure that draws the lubricant from the sump, through the pump tube, and the first shroud is structured such that it directs that lubricant axially through the first flow area.

In addition to one or more aspects of the lubricant system or as an alternate, a second row of vanes is defined on the first shaft, wherein the second row of vanes is axially adjacent to the first row of vanes and spaced part by an axial vane gap; a second shroud surrounds the second row of vanes, wherein the second shroud is axially spaced apart from the first shroud to define a shroud axial gap; a second flow area, between the first shaft and the second shroud; and wherein the first and second rows of vanes of the first shaft are structured such that rotation of the first shaft in the direction during operation of the lubricant pump system draws the lubricant from the sump, through the pump tube, through the shroud axial gap, and the first and second shrouds are structured such that they direct that lubricant axially through the first and second flow areas, such that the lubricant flows in a first axial direction and the lubricant flows in a second axial direction that is opposite the first axial direction.

Disclosed is a bearing system of the gas turbine engine, including the disclosed lubricant pump system; a first bearing, axially adjacent the first row of vanes and supported by the first shaft; and a first lubricant scoop, axially between the first row of vanes and the first bearing and supported by the first shaft, wherein the first lubricant scoop is configured to capture the lubricant flowing from through the first flow area and direct the lubricant to the first bearing; wherein the first bearing includes: a first inner race that defines a first radial slot to receive the lubricant from the first lubricant scoop; a first outer race that is radially spaced from the first inner race; a first rolling element between the first inner race and the first outer race; and a first bearing gap defined between the first inner race and the first outer race, wherein, during rotation between the first inner race and the first outer race, the lubricant flows around the first rolling element, out of the first bearing gap, and is directed by the outer case toward the sump.

In addition to one or more aspects of the bearing system or as an alternate, the pump housing has: a housing outer wall that surrounds the first and second shrouds and defines the pump tube; a housing second segment that surrounds the first outer race; and a housing third segment that extends between the housing outer wall and the housing second segment, wherein the housing third segment of the pump housing defines a first plurality of apertures; and the lubricant flows through the first bearing via the first plurality of apertures to the outer case and is directed toward the sump.

In addition to one or more aspects of the bearing system or as an alternate, the outer case has: a case outer wall that surrounds the pump housing and defines the sump; a case second segment that extends radially toward the first shaft; a case third segment that surrounds the housing second segment of the pump housing, wherein the case third segment of the outer case defines a second plurality of apertures, wherein the lubricant flows through the first bearing via the second plurality of apertures to the outer case, and is directed toward the sump.

In addition to one or more aspects of the bearing system or as an alternate, a first flow channel is defined between the first lubricant scoop and the first shaft; and a second flow channel is defined between the first inner race of the first bearing and the first shaft, whereby the lubricant flows to the first bearing from the first row of vanes via the first and second flow channels.

In addition to one or more aspects of the bearing system or as an alternate, the bearing system includes a second shaft surrounding the first shaft and is adjacent to the second row of vanes; a second bearing, axially adjacent the second row of vanes and supported by the second shaft; and a second lubricant scoop, axially between the second row of vanes and the second bearing and supported by the second shaft, wherein the second lubricant scoop is configured to capture the lubricant flowing from through the second flow area and direct the lubricant to the second bearing; wherein the second bearing includes: a second inner race that defines a second radial slot to receive the lubricant from the second lubricant scoop; a second outer race that is radially spaced from the second inner race; a second rolling element between the second inner race and the second outer race; and a second bearing gap between the second inner race and the second outer race, wherein, during rotation between the second inner race and the second outer race, the lubricant flows around the second rolling element, out of the second bearing gap, and is directed by the outer case toward the sump.

In addition to one or more aspects of the bearing system or as an alternate, the second inner race is disposed against the second shaft; a third flow channel is defined between the second lubricant scoop and the second shaft; and a fourth flow channel is defined between the second inner race of the second bearing and the second shaft, whereby the lubricant flows to the second bearing from the second row of vanes via the third and fourth flow channels.

In addition to one or more aspects of the bearing system or as an alternate, the outer case has: a fourth segment extending radially toward the second shaft; and a fifth segment extending over the second outer race of the second bearing.

In addition to one or more aspects of the bearing system or as an alternate, the lubricant pump system includes: a first seal housing disposed between the first shroud and the pump housing, and a first seal in the first seal housing, wherein the first seal housing has a first inner cavity and the first seal extends from the first inner cavity to the first shroud; and a second seal housing disposed between the second shroud and the pump housing, and a second seal in the second seal housing, wherein the second seal housing has a second inner cavity, and the second seal extends from the second inner cavity to the second shroud, wherein the first and second seal housings are fluidly isolated from each other, define a radial fluid passage between around the pump housing that extends between the pump housing and the axial vane gap between the first and second rows of vanes, and prevents flow around the first and second shrouds and between the first and second bearings, to provide the negative pressure generation when the first shaft is rotating.

Disclosed is a gas turbine engine, including: a first shaft rotatable in a direction during operation of the gas turbine engine; a fan driven by the first shaft; a second shaft rotatable in the direction during operation of the gas turbine engine; a compressor driven by the second shaft; and a bearing system including: an outer case having an outer wall, a first bearing support on one axial side of the outer wall, and a second bearing support on another axial side of the outer wall, wherein the outer wall defines a sump to store a lubricant; a first bearing between the first shaft and the first bearing support; a second bearing between the second shaft and the second bearing support; and a lubricant pump system, including: a pump housing surrounded by the outer case, wherein the pump housing surrounds the first shaft, wherein: the pump housing defines a pump tube that extends into the sump; the first shaft includes a first row of vanes that is adjacent to the first bearing; a first shroud surrounds the first row of vanes; a first flow area is defined between the first shaft and the first shroud; and wherein the first row of vanes of the first shaft are structured such that rotation of the first shaft in the direction during operation of the lubricant pump system creates negative pressure that draws the lubricant from the sump, through the pump tube, and the first shroud is structured such that it directs that lubricant axially through the first flow area and toward the first bearing.

In addition to one or more aspects of the engine or as an alternate, a second row of vanes defined on the first shaft, wherein the second row of vanes is axially adjacent to the first row of vanes and the second shaft, and wherein the second row of vanes is spaced part from the first row of vanes by an axial vane gap; a second shroud surrounds the second row of vanes, wherein the second shroud is axially spaced apart from the first shroud to define a shroud axial gap; a second flow area, between the first shaft and the second shroud; and wherein the first and second rows of vanes of the first shaft are structured such that rotation of the first shaft in the direction during operation of the engine draws the lubricant from the sump, through the pump tube, through the shroud axial gap, and the first and second shrouds are structured such that they direct that lubricant axially through the first and second flow areas, such that the lubricant flows in a first axial direction and the lubricant flows in a second axial direction that is opposite the first axial direction, toward the second bearing.

In addition to one or more aspects of the engine or as an alternate, the engine includes a first lubricant scoop, axially between the first row of vanes and the first bearing and supported against the first shaft, wherein the first lubricant scoop is configured to capture the lubricant flowing from through the first flow area and direct the lubricant to the first bearing; wherein the first bearing includes: a first inner race that defines a first radial slot to receive the lubricant from the first lubricant scoop; a first outer race that is radially spaced from the first inner race; a first rolling element between the first inner race and the first outer race; and a first bearing gap defined between the first inner race and the first outer race, wherein, during rotation between the first inner race and the first outer race, the lubricant flows around the first rolling element, out of the first bearing gap, and is directed by the outer case toward the sump.

In addition to one or more aspects of the engine or as an alternate, the pump housing has: a housing outer wall that surrounds the first and second shrouds and defines the pump tube; a housing second segment that surrounds the first outer race; and a housing third segment that extends between the housing outer wall and the housing second segment, wherein: the housing third segment of the pump housing defines a first plurality of apertures, wherein the lubricant flows through the first bearing via the first plurality of apertures to the outer case, and is directed toward the sump; and the first bearing support of the outer case defines a second plurality of apertures, wherein the lubricant flows through the first bearing via the second plurality of apertures to the outer case, and is directed toward the sump.

In addition to one or more aspects of the engine or as an alternate, a first flow channel is defined between the first lubricant scoop and the first shaft; and a second flow channel is defined between the first inner race of the first bearing and the first shaft, whereby lubricant flows to the first bearing from the first row of vanes via the first and second flow channels.

In addition to one or more aspects of the engine or as an alternate, the engine includes a second lubricant scoop, axially between the second row of vanes and the second bearing and supported by the second shaft, wherein the second lubricant scoop is configured to capture the lubricant flowing from through the second flow area and direct the lubricant to the second bearing; wherein the second bearing includes: a second inner race that defines a second radial slot to receive the lubricant from the second lubricant scoop; a second outer race that is radially spaced from the second inner race; a second rolling element between the second inner race and the second outer race; and a second bearing gap between the second inner race and the second outer race, wherein, during rotation between the second inner race and the second outer race, the lubricant flows around the second rolling element, out of the second bearing gap, and is directed by the outer case toward the sump.

In addition to one or more aspects of the engine or as an alternate, a third flow channel is defined between the second lubricant scoop and the second shaft; and a fourth flow channel is defined between the second inner race of the second bearing and the first shaft, whereby lubricant flows to the second bearing from the second row of vanes via the third and fourth flow channels.

In addition to one or more aspects of the engine or as an alternate, the lubricant pump system includes: a first seal housing disposed between the first shroud and the pump housing, and a first seal in the first seal housing, wherein the first seal housing has a first inner cavity and the first seal extends from the first inner cavity to the first shroud; and a second seal housing disposed between the second shroud and the pump housing, and a second seal in the second seal housing, wherein the second seal housing has a second inner cavity, and the second seal extends from the second inner cavity to the second shroud, wherein the first and second seal housings are fluidly isolated from each other, define a radial fluid passage between around the pump housing that extends between the pump housing and the axial vane gap between the first and second rows of vanes, and prevents flow from traveling around the first and second shrouds and between the first and second bearings, to provide the negative pressure generation when the first shaft is rotating.

Disclosed is a method of lubricating bearings in a bearing system of a gas turbine engine, including: spinning a first shaft that drives a fan to thereby spin a first row of vanes formed on the first shaft and generate negative pressure; and drawing lubricant from a sump formed in an outer case, through a pump tube formed in a pump housing that surrounds the first row of vanes, from the negative pressure; guiding the lubricant to a first flow area defined by the first row of vanes that is surrounded by a first shroud; and guiding the lubricant, via a first lubricant scoop, toward a first bearing disposed between the first shaft and a first bearing support defined by the outer case, and out of the first bearing towards the sump.

In addition to one or more aspects of the method or as an alternate, the method includes spinning a second row of vanes with the spinning of the first shaft to generate the negative pressure; guiding the lubricant to a second flow area defined by the second row of vanes that is surrounded by a second shroud, from the negative pressure; and guiding the lubricant, via a second lubricant scoop, toward a second bearing disposed between a second shaft that drives a compressor and a second bearing support defined by the outer case of the bearing system, and out of the second bearing towards the sump.

### BRIEF DESCRIPTION OF THE DRAWINGS

The following descriptions should not be considered limiting in any way. With reference to the accompanying drawings, like elements are numbered alike:
FIG. 1 is a cross-sectional view of a gas turbine engine;
FIG. 2 shows a section of the engine having a bearing system in which a pump system of the embodiments is located;
FIG. 3 shows a detail of the pump system of FIG. 2;
FIG. 4 shows vanes formed on a first shaft utilized in the engine and located within the pump system;
FIG. 5 shows shrouds that cover the vanes on the first shaft;
FIG. 6 shows a detail of sealing features of FIG. 3; and
FIG. 7 is a flowchart showing a method of lubricating bearings of the bearing system with the pump system.

### DETAILED DESCRIPTION

A detailed description of one or more embodiments of the disclosed apparatus and method are presented herein by way of exemplification and not limitation with reference to the Figures.

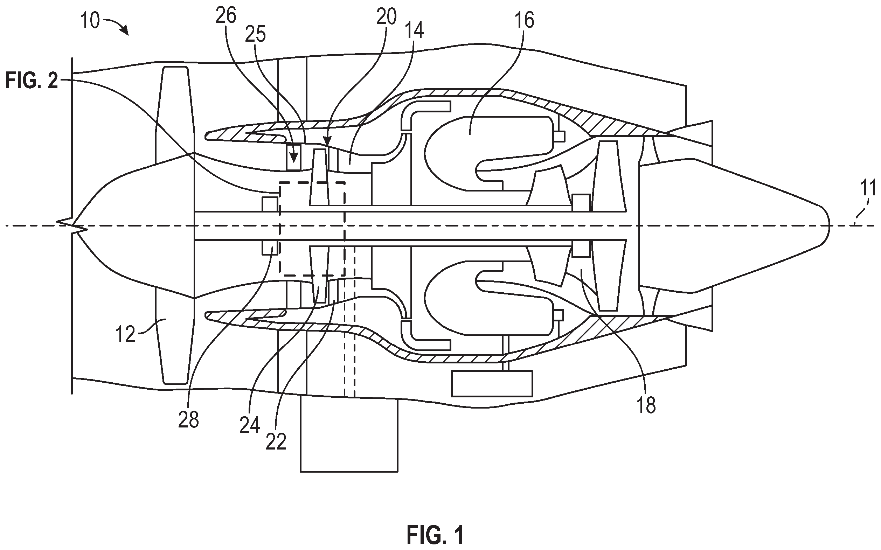

Fig. 1 illustrates a gas turbine engine 10 of a type preferably provided for use in subsonic flight, generally including in serial flow communication a fan 12 through which ambient air is propelled as a core flow C, a multistage compressor 14 for pressurizing the air, a combustor 16 in which the compressed air is mixed with fuel and ignited for generating an annular stream of hot combustion gases, and a turbine section 18 for extracting energy from the combustion gases. The compressor 14 and turbine 18 are mounted on main engine shafts which rotate about a common longitudinal axis 11 of the engine. The multistage compressor section 14 includes at least a first stage, low pressure, axial compressor 20 located downstream of the fan 12. The compressor 14 of the gas turbine engine 10 may be a multi-stage compressor, and thus may comprise several axial and/or centrifugal compressors. Although a turbofan engine is depicted and described herein, it will be understood however that the gas turbine engine 10 may include other types of gas turbine engines mounted on main engine shafts which rotate about a common longitudinal axis 11 of the engine. The multistage compressor section 14 includes at least a first stage, low pressure, axial compressor 20 located downstream of the fan 12. The compressor 14 of the gas turbine engine 10 may be a multi-stage compressor, and thus may comprise several axial and/or centrifugal compressors. Although a turbofan engine is depicted and described herein, it will be understood however that the gas turbine engine 10 may comprise other types of gas turbine engines such as a turbo-shaft, a turbo-prop, or auxiliary power units, and that the axial compressor 20 may form part of the compressor section of any of these types of gas turbine engines. The first stage axial compressor 20 of the compressor section 14 may include generally a rotor 24 and a stator 22 downstream of the rotor, each having a plurality of airfoils blades radially extending through the annular compressor gas path defined by the compressor gas flow passage 25. The compressor gas flow passage 25 may include a stationary and circumferentially extending outer shroud which defines a radial outer boundary of the annular gas flow path through the compressor 20, and an inner hub or shroud which is radially inwardly spaced from outer shroud and defines a radial inner boundary of the annular gas flow path through the compressor 20. The compressor 14 may, in one possible embodiment, include an inlet guide vane assembly 26 located, as a non-limiting example, within the compressor inlet upstream of the rotor 24 of the first stage 20 of the compressor. Alternately, however, the compressor 14 may not comprise an inlet guide vane and instead may include only several compressor stages, each comprising a rotor and a downstream vane assembly.

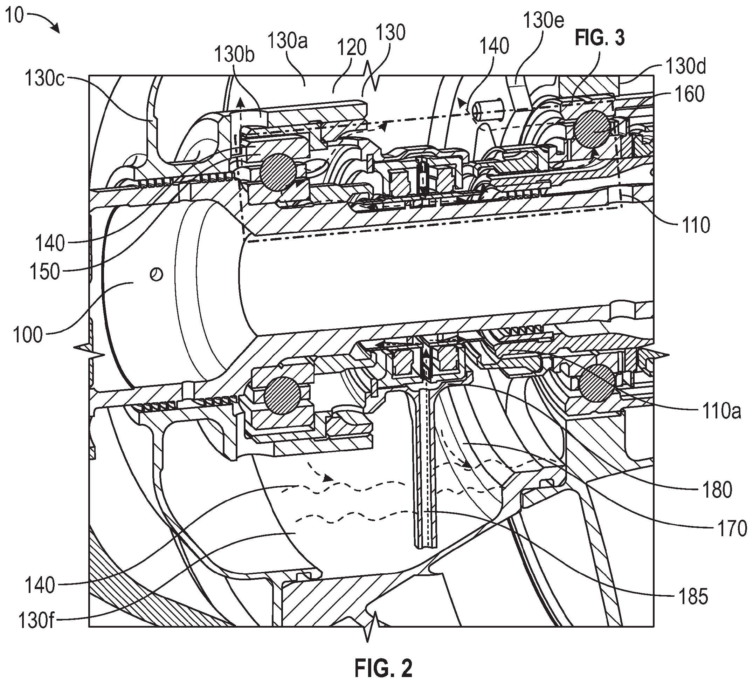

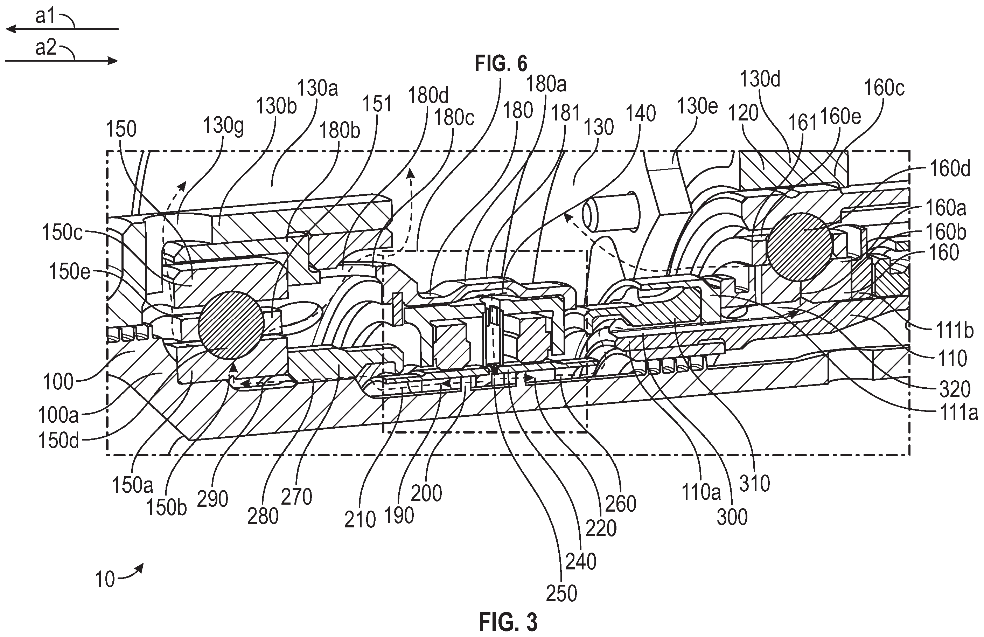

Turning to FIGS. 2 and 3, the engine 10 has a first shaft 100. The fan 12 is driven by the first shaft 100. A second shaft 110 drives the compressor 14. The engine 10 includes a bearing system 120 at the axial end 110A of the second shaft 110. The bearing system 120 includes an outer case 130 having an outer wall 130A. A first bearing support 130B is defined on a first axial side 130C (FIG. 2) of the outer wall 130A. A second bearing support 130D is defined on a second axial side 130E of the outer wall 130A. The outer wall 130A of the outer case 130 defines a sump 130F (FIG. 2) to store a lubricant 140, e.g. oil. A first bearing 150, which may be a thrust bearing, is located between the first shaft 100 and the first bearing support 130B. A second bearing 160, which may also be a thrust bearing, is located between the second shaft 110 and the second bearing support 130D.

The bearing system 120 includes a lubricant pump system 170. The lubricant pump system 170 includes a pump housing 180 surrounded by the outer case 130. The pump housing 180 surrounds the first shaft 100. The pump housing 180 defines a pump tube 185 (FIG. 2) that extends into the sump 130F.

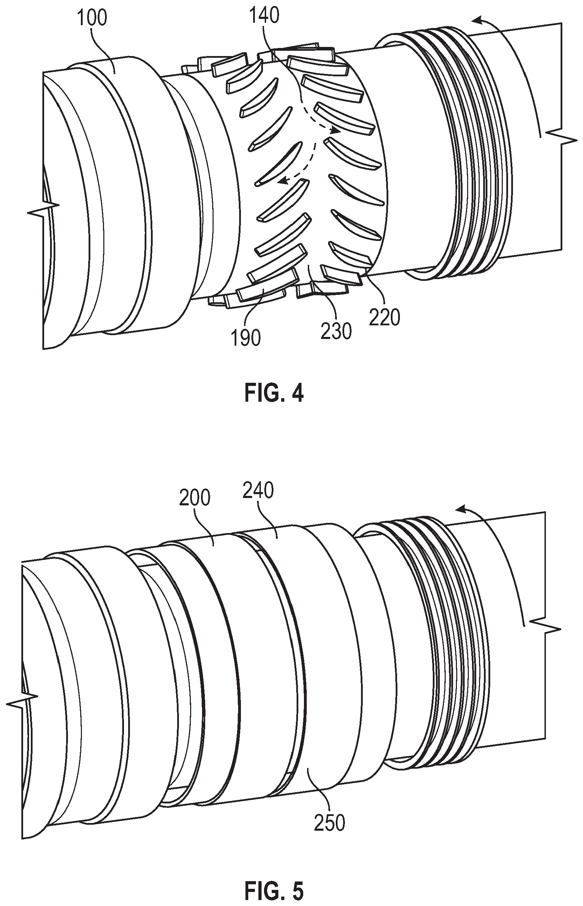

As shown in FIGS. 3 and 4, the first shaft 100 includes a first row of vanes 190 that is adjacent to the first bearing 150. As shown in FIGS. 3 and 5, a first shroud 200 (or forward sleeve) surrounds the first row of vanes 190. A first flow area 210 (FIG. 3) is defined between the first shaft 100 and the first shroud 200. Rotation of the first shaft 100 creates negative pressure that draws the lubricant 140 from the sump 130F, through the pump tube 185. The first shroud 200 directs the lubricant 140 axially through the first flow area 210 and toward the first bearing 150.

A second row of vanes 220 is defined on the first shaft 100. The second row of vanes 220 is axially adjacent to the first row of vanes 190 and the second shaft 110. The second row of vanes 220 is spaced part from the first row of vanes 190 by an axial vane gap 230 (FIG. 4). A second shroud 240 surrounds the second row of vanes 220. The second shroud 240 (or aft sleeve) is axially spaced apart from the first shroud 200 to define a shroud axial gap 250. A second flow area 260 (FIG. 3) is defined between the first shaft 100 and the second shroud 240. Rotation of the first shaft 100 draws the lubricant 140 from the sump 130F, through the pump tube 185, and through the shroud axial gap 250 from an outer surface 181 of the pump housing 180. That is, some of the lubricant 140 initially travels along the outer surface 181 of the pump housing 180 due to the suction force. Though as shown in FIG. 2, some of the lubricant 140 flows directly from the pump tube 185, through the shroud axial gap 250 in the region of the shrouds 200, 240 that is near the pump tube 185.

The first and second shrouds 200, 240 direct the lubricant 140 axially through the first and second flow areas 210, 260. With this configuration, the lubricant 140 flows in a first axial direction A1 toward the first bearing 150 and in a second axial direction A2 that is opposite the first axial direction A1, toward the second bearing 160. In one embodiment, the first and second shrouds 200, 240 are formed as a single shroud with a plurality of circumferentially spaced apart apertures defined along its axial center.

Remaining with FIG. 3, a first lubricant scoop 270, axially between the first row of vanes 190 and the first bearing 150, is supported by the first shaft 100. The first lubricant scoop 270 is configured to capture the lubricant 140 flowing from through the first flow area 210 and direct the lubricant 140 to the first bearing 150. The first lubricant scoop 270 may be a circumferential channel formed at an axial end of a fastener secured to the first shaft to axially fix the first bearing 150 on the first shaft 100, e.g., against a first shaft shoulder 100A.

The first bearing 150 includes a first inner race 150A that defines a first radial slot 150B configured to receive the lubricant 140 from the first lubricant scoop 270. A first outer race 150C is radially spaced from the first inner race 150A. A first rolling element 150D with associated first retainer clips 151 is between the first inner race 150A and the first outer race 150C. A first bearing gap 150E is defined between the first inner race 150A and the first outer race 150C. During rotation between the first inner race 150A and the first outer race 150C, the lubricant 140 flows into the first radial slot 150B, around the first rolling element 150D, out of the first bearing gap 150E, and is directed by the outer wall 130A of the outer case 130 toward the sump 130F.

The pump housing 180 has an outer wall 180A, otherwise considered a housing first segment, that surrounds the first and second shrouds 200, 240 and defines the pump tube 185 and the outer surface 181. A housing second segment 180B of the pump housing 180 surrounds the first outer race 150C. A housing third segment 180C of the pump housing 180 extends between the housing outer wall 180A and the housing second segment 180B. The housing third segment 180C of the pump housing 180 defines a first plurality of apertures 180D that are circumferentially aligned. The lubricant 140 flows through the first bearing 150 via the first plurality of apertures 180D to the outer wall 130A of the outer case 130, and is directed toward the sump 130F. The first bearing support 130B of the outer case 130 defines a second plurality of apertures 130G. The lubricant 140 flows through the first bearing 150 via the second plurality of apertures 130G to the outer wall 130A of the outer case 130, and is directed toward the sump 130F.

A first flow channel 280 is defined between the first lubricant scoop 270 and the first shaft 100. The first flow channel 280 may be an axial groove in either the first scoop 270 or the first shaft 100. A second flow channel 290 is defined between the first inner race 150A of the first bearing 150 and the first shaft 100. The second channel 290 may be a recess in the surface of the first shaft 100. From this configuration, the lubricant 140 flows to the first bearing 150 from the first row of vanes 190 via the first and second flow channels 280, 290.

A second lubricant scoop 300 is axially between the second row of vanes 220 and the second bearing 160 and supported by the second shaft 110. The second lubricant scoop 300 is configured to capture the lubricant 140 flowing from through the second flow area 260 and direct the lubricant 140 to the second bearing 160. The second lubricant scoop 300 may be a circumferential channel formed at an axial end of a fastener secured to the first shaft to axially fix the second bearing 160 on the second shaft 110, e.g., against anti-rotation features 111A, 111B that are axially against either side of the second bearing 160 and located against the second shaft 110.

The second bearing 160 includes a second inner race 160A that defines a second radial slot 160B to receive the lubricant 140 from the second lubricant scoop 300. A second outer race 160C is radially spaced from the second inner race 160A. A second rolling element 160D with associated second retainer clips 161 is between the second inner race 160A and the second outer race 160C. A second bearing gap 160E is between the second inner race 160A and the second outer race 160C. During rotation between the second inner race 160A and the second outer race 160C, the lubricant 140 flows through the second radial slot 160B, around the second rolling element 160D, out of the second bearing gap 160E. The lubricant 140 is directed by the outer wall 130A of the outer case 130, toward the sump 130F.

A third flow channel 310 is defined between the second lubricant scoop 300 and the second shaft 110. The third flow channel 310 may be formed the same as the first flow channel 280, though with channel contours formed in the second shaft 110 rather than the first shaft 100. A fourth flow channel 320 is defined between the second inner race 160A of the second bearing 160 and the first shaft 100. The fourth flow channel 330 may be formed the same as the second flow channel 290, though with channel contours formed in the second shaft 110 rather than the first shaft 100. From this configuration, the lubricant 140 flows to the second bearing 160 from the second row of vanes 220 via the third and fourth flow channels 310, 320.

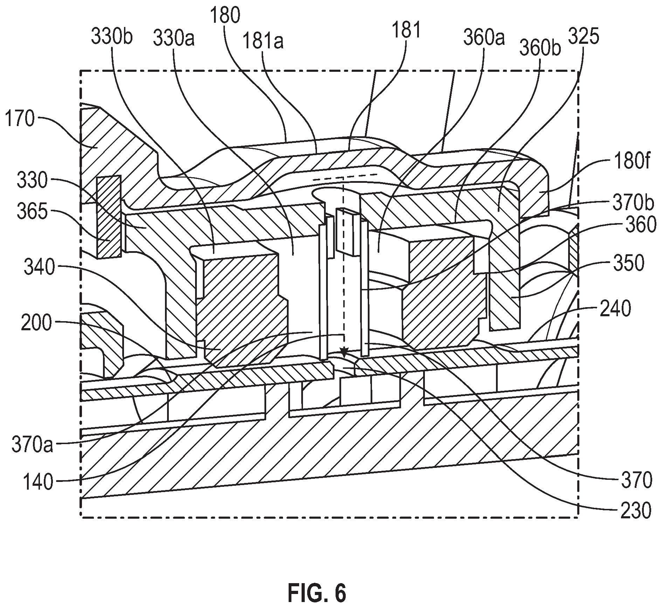

Turning to FIG. 6, the lubricant pump system 170 includes sealing features 325 that include a first seal housing 330 disposed between the first shroud 200 and the pump housing 180, and a first seal 340 is located in the first seal housing 330. The first seal housing 330 has a first inner cavity 330A and the first seal 340 extends, radially within the first inner cavity 330A, e.g., between a first inner top surface 330B of the first seal housing 330 and the first shroud 200. A second seal housing 350 disposed between the second shroud 240 and the pump housing 180, and a second seal 360 is located in the second seal housing 350. The second seal housing 350 has a second inner cavity 360A and the second seal 360 extends, radially, within the second inner cavity 360A, e.g., between an inner top surface 360B of the second seal housing 350 and the second shroud 240. The seals 340, 360 may be carbon seals. The first and second seal housings 330, 350 are contained from lateral movement by a radial clip 365 disposed against the first housing 330 and a radial arm 180F of the pump housing 180 disposed against the second housing 330.

The first and second seal housings 330, 350 are fluidly isolated from each other and define a radial fluid passage 370 (or narrow channel) around the pump housing 180 that extends between the pump housing 180 and the axial vane gap 230 between the first and second rows of vanes 190, 220. A first radially extending wall 370A extends between the first shroud 200 and the first inner top surface 330B of the first seal housing 330. A second second radially extending wall 370B extends between the second shroud 240 and the second inner top surface 360B of the second seal housing 360. The first and second radially extending walls 370A, 370B form the passage 370. The first and second seal housings 330, 350, along with the first and second radially extending walls 370A, 370B form U-shaped structures around the first and second seals 340, 360. The first and second seal housings 330, 350 prevent lubricant 140 flow around the first and second shrouds 200, 240 and between the first and second bearings 150, 160. This configuration provides the negative pressure generation when the first shaft 100 is rotating. An outward arcuate curvature region 181A in the outer surface 181 of the pump housing 180 provides a flow path for lubricant 140 around the first and second seal housings 330, 350 that flows within the pump housing 180.

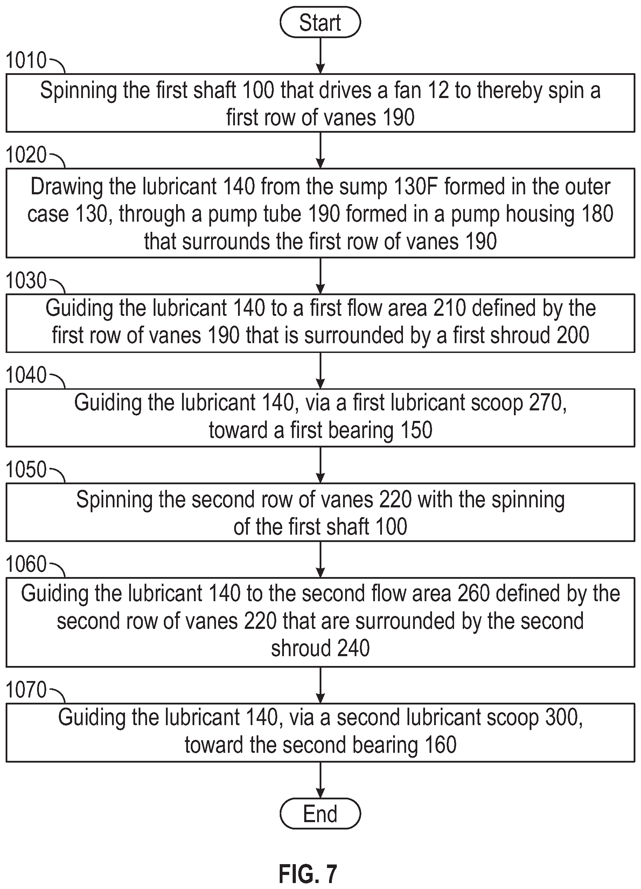

Turning to FIG. 7, a flow shows a method of lubricating the bearings 150, 160 of the bearing system 120 of the engine 10 with the pump system 170. As shown in block 1010, the method includes spinning the first shaft 100 that drives a fan 12. This spins a first row of vanes 190 formed on the first shaft 100 and generates negative pressure. As shown in block 1020, and as a result of generating the negative pressure, the method includes drawing the lubricant 140 from the sump 130F formed in the outer case 130, through a pump tube 185 formed in a pump housing 180 that surrounds the first row of vanes 190. As shown in block 1030, the method includes guiding the lubricant 140 to a first flow area 210 defined by the first row of vanes 190 that is surrounded by a first shroud 200. As shown in block 1040, the method includes guiding the lubricant 140, via a first lubricant scoop 270, toward a first bearing 150 disposed between the first shaft 100 and the first bearing support 130B defined by the outer case 130, and out of the first bearing 150 towards the sump 130F.

As shown in block 1050, the method includes spinning the second row of vanes 220 with the spinning of the first shaft 100 to generate the negative pressure. As shown in block 1060, and as a result of generating the negative pressure, the method includes guiding the lubricant 140 to the second flow area 260 defined by the second row of vanes 220 that are surrounded by the second shroud 240. As shown in block 1070, the method includes guiding the lubricant 140, via the second lubricant scoop 300, toward the second bearing 160 disposed between the second shaft 110 that drives the compressor 14 and the second bearing support 130D defined by the outer case 130, and out of the second bearing 160 towards the sump 130F.

The embodiments provide a pump configuration which includes a first shaft 100 with rows of vanes 190, 220 that are shrouded. The space between the shrouds 200, 240 forms a radial fluid passage 370. A pair of seals 340, 350 are adjacent to the radial fluid passage 370. The spinning of the first shaft 100 draws air through the vanes 190, 220 and, with the sealing provided by the seals 340, 350, generates a low pressure area. The low pressure draws the lubricant 140 from the lubricant sump 130F, which is directed to the bearings 150, 160.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A lubricant pump system (170) of a gas turbine engine (10), comprising:
an outer case (130);
a pump housing (180) surrounded by the outer case (130);
a first shaft (100) surrounded by the pump housing (180) and rotatable in a direction during operation of the lubricant pump system (170),
wherein:
the outer case (130) has an outer wall (130A) that defines a sump (130F) configured to store a lubricant (140);
the pump housing (180) defines a pump tube (185) that extends into the sump (130F);
the first shaft (100) includes a first row of vanes (190);
a first shroud (200) surrounds the first row of vanes (190);
a first flow area (210) is defined between the first shaft (100) and the first shroud (200); and
wherein the first row of vanes (190) of the first shaft (100) are structured such that rotation of the first shaft (100) in the direction during operation of the lubricant pump system (170) creates negative pressure that draws the lubricant (140) from the sump (130F), through the pump tube (185), and the first shroud (200) is structured such that it directs that lubricant (140) axially through the first flow area (210).

2. The lubricant pump system of claim 1, wherein:
a second row of vanes (220) is defined on the first shaft (100), wherein the second row of vanes (220) is axially adjacent to the first row of vanes (190) and spaced part by an axial vane gap (230);
a second shroud (240) surrounds the second row of vanes (220), wherein the second shroud (240) is axially spaced apart from the first shroud (200) to define a shroud axial gap (250);
a second flow area (260), between the first shaft (100) and the second shroud (240); and
wherein the first and second rows of vanes (190, 220)) of the first shaft (100) are structured such that rotation of the first shaft (100) in the direction during operation of the lubricant pump system (170) draws the lubricant (140) from the sump (130F), through the pump tube (185), through the shroud axial gap (250), and the first and second shrouds (200, 240) are structured such that they direct that lubricant (140) axially through the first and second flow areas (210, 260), such that the lubricant (140) flows in a first axial direction (A1) and the lubricant (140) flows in a second axial direction (A2) that is opposite the first axial direction (A1).

3. A bearing system (120) of the gas turbine engine (10), comprising:
the lubricant pump system (170) of claim 2;
a first bearing (150), axially adjacent the first row of vanes (190) and supported by the first shaft (100); and
a first lubricant scoop (270), axially between the first row of vanes (190) and the first bearing (150) and supported by the first shaft (100) , wherein the first lubricant scoop (270) is configured to capture the lubricant (140) flowing from through the first flow area (210) and direct the lubricant (140) to the first bearing (150);
wherein the first bearing (150) includes:
a first inner race (150A) that defines a first radial slot (150B) to receive the lubricant (140) from the first lubricant scoop (270);
a first outer race (150C) that is radially spaced from the first inner race (150A);
a first rolling element (150D) between the first inner race (150A) and the first outer race (150C); and
a first bearing gap (150E) defined between the first inner race (150A) and the first outer race (150C),
wherein, during rotation between the first inner race (150A) and the first outer race (150C), the lubricant (140) flows around the first rolling element (150D), out of the first bearing gap (150E), and is directed by the outer case (130) toward the sump (130F).

4. The bearing system of claim 3, wherein the pump housing (180) has:
a housing outer wall (180A) that surrounds the first and second shrouds (200, 240) and defines the pump tube (185);
a housing second segment (180B) that surrounds the first outer race (150C); and
a housing third segment (180C) that extends between the housing outer wall (180A) and the housing second segment (180B),
wherein the housing third segment (180C) of the pump housing (180) defines a first plurality of apertures (180D); and
the lubricant (140) flows through the first bearing (150) via the first plurality of apertures (180D) to the outer case (130) and is directed toward the sump (130F).

5. The bearing system of claim 4, wherein the outer case (130) has:
a case outer wall (130A) that surrounds the pump housing (180) and defines the sump (130F);
a case second segment that extends radially toward the first shaft (100);
a case third segment that surrounds the housing second segment (180B) of the pump housing (180),
wherein the case third segment of the outer case (130) defines a second plurality of apertures (130G), wherein the lubricant (140) flows through the first bearing (150) via the second plurality of apertures (130G) to the outer case (130), and is directed toward the sump (130F).

6. The bearing system of claim 5, wherein:
a first flow channel (280) is defined between the first lubricant scoop (270) and the first shaft (100); and
a second flow channel (290) is defined between the first inner race (150A) of the first bearing (150) and the first shaft (100),
whereby the lubricant (140) flows to the first bearing (150) from the first row of vanes (190) via the first and second flow channels (280, 290).

7. The bearing system of claim 6, comprising:
a second shaft (110) surrounding the first shaft (100) and adjacent to the second row of vanes (220);
a second bearing (160), axially adjacent the second row of vanes (220) and supported by the second shaft (110); and
a second lubricant scoop (300), axially between the second row of vanes (220) and the second bearing (160) and supported by the second shaft (110), wherein the second lubricant scoop (300) is configured to capture the lubricant (140) flowing from through the second flow area (260) and direct the lubricant (140) to the second bearing (160);
wherein the second bearing (160) includes:
a second inner race (160A) that defines a second radial slot (160B) to receive the lubricant (140) from the second lubricant scoop (300);
a second outer race (160C) that is radially spaced from the second inner race (160A);
a second rolling element (160D) between the second inner race (160A) and the second outer race (160C); and
a second bearing gap (160E) between the second inner race (160A) and the second outer race (160C),
wherein, during rotation between the second inner race (160A) and the second outer race (160C) , the lubricant (140) flows around the second rolling element (160E), out of the second bearing gap (160E), and is directed by the outer case (130) toward the sump (130F).

8. The bearing system of claim 7, wherein:
the second inner race (160A) is disposed against the second shaft (110);
a third flow channel (310) is defined between the second lubricant scoop (300) and the second shaft (110); and
a fourth flow channel (320) is defined between the second inner race (160A) of the second bearing (160) and the second shaft (110),
whereby the lubricant (140) flows to the second bearing (160) from the second row of vanes (220) via the third and fourth flow channels (310, 320),
optionally wherein:
the outer case (130) has:
a fourth segment extending radially toward the second shaft (110); and
a fifth segment extending over the second outer race (160C) of the second bearing (160),
further optionally wherein the lubricant pump system (170) comprises:
a first seal housing (330) disposed between the first shroud (200) and the pump housing (180), and a first seal (340) in the first seal housing (330), wherein the first seal housing (330) has a first inner cavity (330A) and the first seal (340) extends from the first inner cavity (330A) to the first shroud (200); and
a second seal housing (350) disposed between the second shroud (240) and the pump housing (180), and a second seal (360) in the second seal housing (350) , wherein the second seal housing (350) has a second inner cavity (360A), and the second seal (360) extends from the second inner cavity (360A) to the second shroud (240),
wherein the first and second seal housings (330, 350) are fluidly isolated from each other, define a radial fluid passage (370) between around the pump housing (180) that extends between the pump housing (180) and the axial vane gap (230) between the first and second rows of vanes (190, 220), and prevents flow around the first and second shrouds (200, 240) and between the first and second bearings (150, 160), to provide the negative pressure generation when the first shaft (100) is rotating.

9. A gas turbine engine (10), comprising:
a first shaft (100) rotatable in a direction during operation of the gas turbine engine (10);
a fan (12) driven by the first shaft (100);
a second shaft (110) rotatable in the direction during operation of the gas turbine engine (10);
a compressor (14; 20) driven by the second shaft (110); and
a bearing system (120) including:
an outer case (130) having an outer wall (130A), a first bearing support (130B) on one axial side (130C) of the outer wall (130A), and a second bearing support (130D) on another axial side (130E) of the outer wall (130A), wherein the outer wall (130A) defines a sump (130F) to store a lubricant (140);
a first bearing (150) between the first shaft (100) and the first bearing support (130B);
a second bearing (160) between the second shaft (110) and the second bearing support (130D); and
a lubricant pump system (170), including:
a pump housing (180) surrounded by the outer case (130), wherein the pump housing (180) surrounds the first shaft (100), wherein:
the pump housing (180) defines a pump tube (185) that extends into the sump (130F);
the first shaft (100) includes a first row of vanes (190) that is adjacent to the first bearing (150);
a first shroud (200) surrounds the first row of vanes (190);
a first flow area (210) is defined between the first shaft (100) and the first shroud (200); and
wherein the first row of vanes (190) of the first shaft (100) are structured such that rotation of the first shaft (100) in the direction during operation of the lubricant pump system (170) creates negative pressure that draws the lubricant (140) from the sump (130F), through the pump tube (185), and the first shroud (200) is structured such that it directs that lubricant (140) axially through the first flow area (210) and toward the first bearing (150).

10. The engine of claim 9, wherein:
a second row of vanes (220) defined on the first shaft (100), wherein the second row of vanes (220) is axially adjacent to the first row of vanes (190) and the second shaft (110), and wherein the second row of vanes (220) is spaced part from the first row of vanes (190) by an axial vane gap (230);
a second shroud (240) surrounds the second row of vanes (220), wherein the second shroud (240) is axially spaced apart from the first shroud (200) to define a shroud axial gap (250);
a second flow area (260), between the first shaft (100) and the second shroud (240); and
wherein the first and second rows of vanes (190, 220) of the first shaft (100) are structured such that rotation of the first shaft (100) in the direction during operation of the engine (10) draws the lubricant (140) from the sump (130F), through the pump tube (185), through the shroud axial gap (250), and the first and second shrouds (200, 240) are structured such that they direct that lubricant axially through the first and second flow areas (210, 260), such that the lubricant (140) flows in a first axial direction (A1) and the lubricant (140) flows in a second axial direction (A2) that is opposite the first axial direction (A1), toward the second bearing (160).

11. The engine of claim 10, comprising:
a first lubricant scoop (270), axially between the first row of vanes (190) and the first bearing (150) and supported against the first shaft (100), wherein the first lubricant scoop (270) is configured to capture the lubricant (140) flowing from through the first flow area (210) and direct the lubricant (140) to the first bearing (150);
wherein the first bearing (150) includes:
a first inner race (150A) that defines a first radial slot (150B) configured to receive the lubricant (140) from the first lubricant scoop (270);
a first outer race (150C) that is radially spaced from the first inner race (150A);
a first rolling element (150D) between the first inner race (150A) and the first outer race (150C); and
a first bearing gap (150E) defined between the first inner race (150A) and the first outer race (150C),
wherein, during rotation between the first inner race (150A) and the first outer race (150C), the lubricant (140) flows around the first rolling element (150D), out of the first bearing gap (150E), and is directed by the outer case (130) toward the sump (130F).

12. The engine of claim 11, wherein the pump housing (180) has:
a housing outer wall (180A) that surrounds the first and second shrouds (200, 240) and defines the pump tube (185);
a housing second segment (180B) that surrounds the first outer race (150C); and
a housing third segment (180C) that extends between the housing outer wall (180A) and the housing second segment (180B),
wherein:
the housing third segment (180C) of the pump housing (180) defines a first plurality of apertures (180D), wherein the lubricant (140) flows through the first bearing (150) via the first plurality of apertures (180D) to the outer case (130), and is directed toward the sump (130F); and
the first bearing support (130B) of the outer case (130) defines a second plurality of apertures (130G), wherein the lubricant (140) flows through the first bearing (150) via the second plurality of apertures (130g) to the outer case (130), and is directed toward the sump (130F).

13. The engine of claim 12, wherein:
a first flow channel (280) is defined between the first lubricant scoop (270) and the first shaft (100); and
a second flow channel (290) is defined between the first inner race (150A) of the first bearing (150) and the first shaft (100),
whereby lubricant (140) flows to the first bearing (150) from the first row of vanes (190) via the first and second flow channels (2180, 290),
optionally, wherein the engine (10) comprises:
a second lubricant scoop (300), axially between the second row of vanes (220) and the second bearing (160) and supported by the second shaft (110), wherein the second lubricant scoop (300) is configured to capture the lubricant (140) flowing from through the second flow area (260) and direct the lubricant (140) to the second bearing (160);
wherein the second bearing (160) includes:
a second inner race (160A) that defines a second radial slot (160B) to receive the lubricant (140) from the second lubricant scoop (300);
a second outer race (160C) that is radially spaced from the second inner race (160A);
a second rolling element (160D) between the second inner race (160A) and the second outer race (160C); and
a second bearing gap (160E) between the second inner race (160A) and the second outer race (160C),
wherein, during rotation between the second inner race (160A) and the second outer race (160C), the lubricant (140) flows around the second rolling element (160D), out of the second bearing gap (160E0, and is directed by the outer case (130) toward the sump (130F),
optionally wherein:
a third flow channel (310) is defined between the second lubricant scoop (300) and the second shaft (110); and
a fourth flow channel (320) is defined between the second inner race (160A) of the second bearing (160) and the first shaft (100),
whereby lubricant (140) flows to the second bearing (160) from the second row of vanes (220) via the third and fourth flow channels (310, 320),
further optionally, wherein the lubricant pump system (170) comprises:
a first seal housing (330) disposed between the first shroud (200) and the pump housing (180), and a first seal (340) in the first seal housing (330), wherein the first seal housing (330) has a first inner cavity (330A) and the first seal (340) extends from the first inner cavity (330A) to the first shroud (200); and
a second seal housing (350) disposed between the second shroud (240) and the pump housing (180), and a second seal (360) in the second seal housing (350), wherein the second seal housing (350) has a second inner cavity (360A), and the second seal (360) extends from the second inner cavity (360A) to the second shroud (240),
wherein the first and second seal housings (330, 350) are fluidly isolated from each other, define a radial fluid passage (370) between around the pump housing (180) that extends between the pump housing (180) and the axial vane gap (230) between the first and second rows of vanes (190, 220), and prevents flow from traveling around the first and second shrouds (200, 240) and between the first and second bearings (150, 160), to provide the negative pressure generation when the first shaft (100) is rotating.

14. A method of lubricating bearings (150, 160) in a bearing system (120) of a gas turbine engine (10), comprising:
spinning a first shaft (100) that drives a fan (12) to thereby spin a first row of vanes (190) formed on the first shaft (100) and generate negative pressure; and
drawing lubricant (140) from a sump (130F) formed in an outer case (130), through a pump tube (185) formed in a pump housing (180) that surrounds the first row of vanes (190), from the negative pressure;
guiding the lubricant (140) to a first flow area (210) defined by the first row of vanes (190) that is surrounded by a first shroud (200); and
guiding the lubricant (140), via a first lubricant scoop (270), toward a first bearing (150) disposed between the first shaft (100) and a first bearing support (130B) defined by the outer case (130), and out of the first bearing (150) towards the sump (130F).

15. The method of claim 14, further comprising:
spinning a second row of vanes (220) with the spinning of the first shaft (100) to generate the negative pressure;
guiding the lubricant (140) to a second flow area (260) defined by the second row of vanes (220) that is surrounded by a second shroud (240), from the negative pressure; and
guiding the lubricant (140), via a second lubricant scoop (300), toward a second bearing (160) disposed between a second shaft (110) that drives a compressor (14; 20) and a second bearing support (130D) defined by the outer case (130) of the bearing system (120), and out of the second bearing (160) towards the sump (130F).
